# EUROPÄISCHE PATENTSCHRIFT

(11) **EP 4 332 502 B1**
(45) Veröffentlichungstag und Bekanntmachung des Hinweises auf die Patenterteilung: **23.07.2025**
(21) Anmeldenummer: 22193107.4
(22) Anmeldetag: 31.08.2022
(51) Int. Cl.: G01C 21/00, G01C 21/12, B61L 25/02

(54) **VERFAHREN UND EINRICHTUNG ZUR POSITIONSBESTIMMUNG EINES SPURGEBUNDENEN FAHRZEUGS**
METHOD AND DEVICE FOR DETERMINING THE POSITION OF A TRACK-BOUND VEHICLE
PROCÉDÉ ET DISPOSITIF DE DÉTERMINATION DE LA POSITION D'UN VÉHICULE GUIDÉ SUR RAILS

(43) Veröffentlichungstag der Anmeldung: 06.03.2024
(73) Patentinhaber: Siemens Mobility GmbH, 81739 München (DE)
(72) Erfinder: Bähr, Maik, 38304 Wolfenbüttel (DE); Fruhnert, Michael, 12437 Berlin (DE); Johannes, Lars, 38108 Braunschweig (DE)
(74) Vertreter: Siemens Patent Attorneys

(56) Entgegenhaltungen:
- DE-A1- 102012 217 426
- DE-A1- 102015 205 175
- DE-C1- 19 532 104
- US-A1- 2009 210 154

## Beschreibung

Verfahren und Einrichtungen zur Positionsbestimmung von spurgebundenen Fahrzeugen sind aus dem Stand der Technik bekannt und werden verwendet, um die Position des Fahrzeugs während der Fahrt zu bestimmen. Dies ist beispielsweise nötig für eine Zugsteuerung bezüglich der Zugsicherheit oder auch um eine Halteposition des Fahrzeugs genau anfahren zu können. Beispielsweise können im Streckenverlauf des Fahrzeugs Balisen verlegt sein, die Streckenpunkte auf der Fahrstrecke repräsentieren, die durch Auslesen einer Baliseninformation genau bekannt sind. Aus der Baliseninformation gehen beispielsweise die genaue Position, eine eindeutige Bezeichnung und gegebenenfalls weitere Informationen hervor. Zwischen diesen Streckenpunkten wird die genaue Position häufig mittels einer Wegmesseinrichtung bestimmt, die den zurückgelegten Weg misst.

Diese Positionsermittlung kann aber durchaus fehlerbehaftet sein, beispielsweise durch einen falsch angenommenen Raddurchmesser, durch den die berechnete Position ungenau wird. Diese Ungenauigkeit kann beispielsweise durch erhöhte Wartungsintervalle oder kürzere Balisenabstände kompensiert werden. Diese Lösungen sind allerdings kostenintensiv und daher weniger attraktiv.

In der DE 195 32 104 C1 ist ein Verfahren und eine Vorrichtung zur Bestimmung der Position wenigstens einer Stelle eines spurgeführten Fahrzeugs beschrieben.

Es ist daher die Aufgabe der vorliegenden Erfindung, ein Verfahren und eine Einrichtung der eingangs genannten Art bereitzustellen, welche die Genauigkeit bei der Positionsbestimmung eines spurgebundenen Fahrzeugs erhöht.

Erfindungsgemäß wird diese Aufgabe gelöst durch ein Verfahren zur Positionsbestimmung eines spurgebundenen Fahrzeugs gemäß Patentanspruch 1, bei dem mehrere erste Abstandswerte für unterschiedliche Abstände zwischen jeweils zwei Streckenpunkten auf einer Fahrstrecke des Fahrzeugs auf eine erste Art ermittelt werden, bei dem mehrere zweite Abstandswerte für die unterschiedlichen Abstände zwischen den jeweils zwei Streckenpunkten auf eine zweite zur ersten unterschiedlichen Art ermittelt werden, bei dem mehrere Abstandswertepaare aus jeweils dem ersten Abstandswert und dem zweiten Abstandswert für den Abstand zwischen den gleichen zwei Streckenpunkten gebildet werden, bei dem wenigstens ein gemeinsamer Korrekturwert für die mehreren Abstandswertepaare ermittelt wird, für den die Differenz über die mehreren Abstandswertepaaren minimal ist, und bei dem der ermittelte Korrekturwert bei der Positionsbestimmung des Fahrzeugs verwendet wird.

Ferner wird die Aufgabe gelöst durch eine Einrichtung zur Positionsbestimmung gemäß Patentanspruch 10 für ein spurgebundenes Fahrzeug mit wenigstens einer ersten Abstandsbestimmungseinrichtung zum Ermitteln mehrerer erster Abstandswerte für unterschiedliche Abstände zwischen jeweils zwei Streckenpunkten auf einer Fahrstrecke des Fahrzeugs auf eine erste Art, mit wenigstens einer zweiten Abstandsbestimmungseinrichtung zum Ermitteln mehrerer zweiter Abstandswerte für die unterschiedlichen Abstände zwischen den jeweils zwei Streckenpunkten auf eine zweite zur ersten unterschiedlichen Art, und mit wenigstens einer Recheneinrichtung, die zum Bilden mehrerer Abstandswertepaare aus jeweils dem ersten Abstandswert und dem zweiten Abstandswert für den Abstand zwischen den gleichen zwei Streckenpunkten und zum Ermitteln wenigstens eines gemeinsamen Korrekturwerts für die mehreren Abstandswertepaare, für den die Differenz über die mehreren Abstandswertepaare minimal ist, ausgebildet ist, wobei die erfindungsgemäße Einrichtung zur Positionsbestimmung zum Verwenden des ermittelten Korrekturwerts bei der Positionsbestimmung des Fahrzeugs ausgebildet ist.

Die erfindungsgemäße Lösung hat den Vorteil, dass die Genauigkeit der Positionsbestimmung für das spurgebundene Fahrzeug durch Berücksichtigung des Korrekturwerts auf einfache Weise und mit wenig Kostenaufwand erhöht werden kann. Der Korrekturwert kann im laufenden Betrieb des Fahrzeugs ermittelt und bei der Positionsbestimmung verwendet werden, um die Genauigkeit zu erhöhen. Weiterhin kann der Korrekturwert kontinuierlich aktualisiert werden, um beispielsweise Veränderungen im Raddurchmesser zu kompensieren. Bei einem aktualisierten Korrekturwert kann dieser mit dem oder den vorherigen verglichen bzw. ein Verlauf bestimmt werden. Der Verlauf der zeitlich nacheinander berechneten Korrekturwerte muss sich in eine vorbestimmte Richtung entwickeln, weil z.B. ein Raddurchmesser durch Verschleiß immer kleiner wird. Wenn diese vorbestimmte Richtung nicht eintritt, also der Verlauf sich unerwartet entwickelt, kann ein Warnsignal oder eine Fehlermeldung ausgegeben werden, weil eine nötige Plausibilität nicht gegeben ist. Ferner kann die erfindungsgemäße Lösung für unterschiedliche Verfahren zur Abstandswertermittlung angewendet werden.

Bei der erfindungsgemäßen Lösung werden mehrere erste Abstandswerte für unterschiedliche Abstände zwischen zwei Streckenpunkte auf eine erste Art ermittelt. Dabei müssen die Streckenpunkte nicht unbedingt direkt hintereinander liegen, sondern können auch weiter voneinander entfernt sein und dazwischenliegende andere Streckenpunkte aufweisen. Mit einer steigenden Anzahl von verwendeten Abstandswerten kann die Genauigkeit erhöht werden. Ferner werden zweite Abstandswerte für die unterschiedlichen Abständen zwischen den Streckenpunkten auf eine unterschiedliche Art ermittelt. Beispielsweise werden die ersten Abstandswerte über eine Wegmesseinrichtung des Fahrzeugs und die zweiten Abstandswerte aus entsprechenden Karteninformationen zum Streckenverlauf ermittelt. Die Streckenpunkte auf der Fahrstrecke des Fahrzeugs sind Punkte, für welche die Position genau bekannt ist, wie beispielsweise Balisen oder auch virtuelle Balisen in Form von Punkten eines GNSS Systems (Global Navigation Satellite System). Anschließend werden aus jeweils dem ersten Abstandswert und dem zweiten Abstandswert für den Abstand zwischen den gleichen zwei Streckenpunkten mehrere Abstandswertepaare gebildet. Es werden also für den Abstand zwischen den gleichen zwei Streckenpunkten zwei Abstandswerte in Form des ersten Abstandswerts und des zweiten Abstandswert zu einem Abstandswertepaar zusammengefasst. Dies wird für mehrere Streckenpunkte durchgeführt. Der erste und der zweite Abstandswert können sich hierbei durchaus unterscheiden, weil sie auf unterschiedliche Arten ermittelt wurden. Anschließend wird der gemeinsame Korrekturwert für die mehreren Abstandswertepaare ermittelt, für den die Differenz über die mehreren Abstandswertepaare minimal ist. Dies kann beispielsweise über die bekannte Methode der kleinsten Fehlerquadrate durchgeführt werden, mit dessen Hilfe ein solcher Korrekturwert für die Abstandswertepaare ermittelt werden kann. Durch die Verwendung von mehreren Abstandswertpaaren wird ein stochastischer Fehler weitgehend minimiert. Durch die Verwendung von zwei unterschiedlichen Arten von Abstandswertermittlung, die jeweils für sich fehlerbehaftet sein können, können auch Korrekturwerte für den einen oder den anderen Fehler oder sogar für beide bestimmt werden. Vor der Ermittlung des Korrekturwerts können Ausreißer bei den Abstandswertepaaren entfernt werden, um den ermittelten Korrekturwert zu verbessern. Ausreißer können hierbei Abstandswertepaare sein, deren Differenz von einem erwarteten Grenzwert abweichen.

Die Erfindung kann durch vorteilhafte Ausgestaltungen weiterentwickelt werden, die im Folgenden beschrieben sind.

So kann der erste Abstandswert mittels einer Wegmesseinrichtung und der zweite Abstandswert mit Hilfe von Karteninformationen bestimmt werden. Dabei kann als Wegmesseinrichtung eine Odometrieeinrichtung verwendet werden. Unter einer Odometrieeinrichtung wird üblicherweise eine Wegmessung verstanden, die eine Anzahl der Radumdrehungen und den Raddurchmesser verwendet. Alternativ kann als Wegmesseinrichtung auch eine Radarmesseinrichtung verwendet werden. Diese Ausgestaltungen haben den Vorteil, dass sie allesamt sehr erprobt und dadurch eine zuverlässige Abstandswerteermittlung gewährleistet ist.

In einer weiteren vorteilhaften Ausgestaltung kann der erste Abstandswert mit dem Korrekturwert in Form eines Korrekturfaktors multipliziert werden, wobei der Korrekturfaktor einen Fehler eines Raddurchmessers des Fahrzeugs repräsentiert. Dies hat den Vorteil, dass der Fehler des Raddurchmessers eine häufige Fehlerursache ist und hierdurch korrigiert werden kann.

Ferner kann der zweite Abstandswert mit dem Korrekturwert als Korrekturoffsetwert addiert werden, der einen Offsetfehler der Streckenpunkte in den Karteninformationen repräsentiert. Dies hat den Vorteil, dass auch ein Offsetfehler mithilfe des Korrekturwerts korrigiert werden kann.

Um unterschiedlichste Fehlerursachen zu kompensieren, kann der wenigstens eine Korrekturwert als Korrekturoffsetwert und/oder Korrekturfaktor verwendet werden.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Die Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses das erfindungsgemäße Werkstück erzeugt.

Ferner betrifft die Erfindung auch eine Steuerungseinrichtung, insbesondere ATO-Einrichtung, die zur Steuerung eines spurgebundenen Fahrzeugs ausgebildet ist, wobei die Steuerungseinrichtung die erfindungsgemäße Einrichtung zur Positionsbestimmung verwendet oder umfasst.

Weiterhin betrifft die Erfindung auch ein spurgebundenes Fahrzeug, das erfindungsgemäß wenigstens eine erfindungsgemäße Einrichtung zur Positionsbestimmung und/oder eine erfindungsgemäße Steuerungseinrichtung umfasst.

In einer vorteilhaften Ausgestaltung des erfindungsgemäßen spurgebundenen Fahrzeugs kann dieses wenigstens eine Balisenempfangseinrichtung umfassen, die zum Empfangen von Baliseninformationen ausgebildet ist, wobei die Streckenpunkte auf der Fahrstrecke des spurgebundenen Fahrzeugs zumindest teilweise als Baliseninformationen aussendende Balisen ausgebildet sind.

Ferner kann das spurgebundene Fahrzeug wenigstens eine Wegmesseinrichtung, insbesondere eine Odometrieeinrichtung, und wenigstens eine Einrichtung zur Ermittlung von Abstandswerten aus Karteninformationen umfassen.

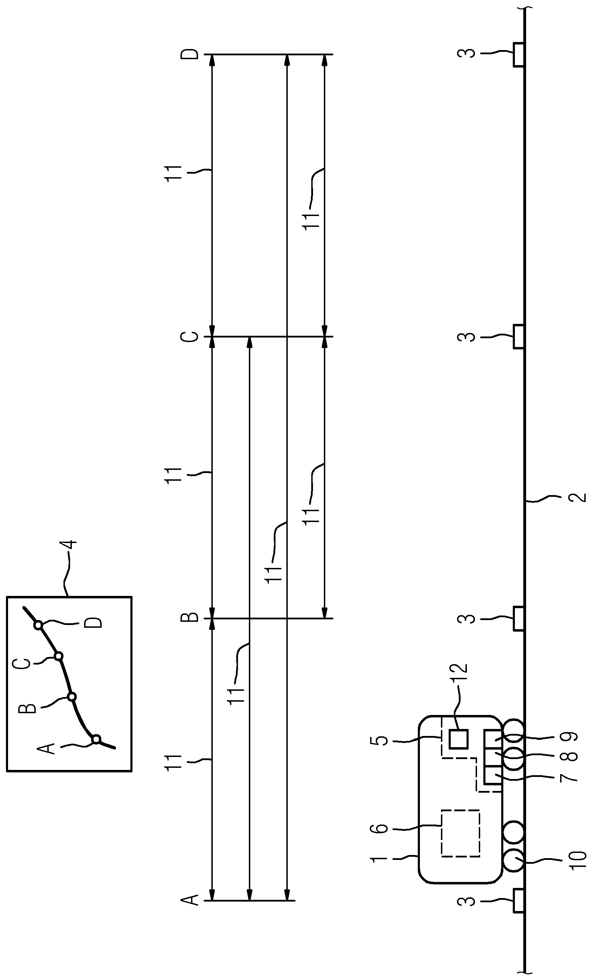

Im Folgenden wird die Erfindung mit Bezug auf die beigefügte Zeichnung erläutert.

Die einzige Figur zeigt eine beispielhafte Ausführungsform der Erfindung und wird im Folgenden erläutert.

Ein spurgebundenes Fahrzeug 1 fährt entlang einer Fahrstrecke 2. Das Fahrzeug 1 ist beispielsweise ein Schienenfahrzeug wie beispielsweise ein Zug, eine Lokomotive, eine U-Bahn, eine Straßenbahn oder ähnliches. Die Fahrstrecke 2 kann beispielsweise ein durch Gleise ausgebildeter Fahrweg sein, wie er für spurgebundene Fahrzeuge wie Züge üblich ist. Entlang der Fahrstrecke 2 sind mehrere Balisen 3 angeordnet, die bekannte Streckenpunkte A, B, C, D darstellen sollen. Die genauen Positionen der Balisen 3 und der Streckenpunkte A, B, C, D ist bekannt und in einer digitalen Karte 4 vermerkt.

Das erfindungsgemäße Fahrzeug 1 umfasst eine erfindungsgemäße Einrichtung 5 zur Positionsbestimmung, eine Steuerungseinrichtung 6, eine Balisenempfangseinrichtung 7, eine Wegmesseinrichtung 8 und eine Einrichtung 9 zur Ermittlung von Abstandswerten aus Karteninformationen, in der die Karte 4 enthalten und abgespeichert ist.

Wenn das Fahrzeug 1 entlang der Fahrstrecke 2 fährt, überfährt es von Zeit zu Zeit eine Balise 3. Bei der Überfahrt empfängt die Balisenempfangseinrichtung 7 in bekannter Weise eine Baliseninformation, die von der jeweiligen Balise ausgesendet wird. Diese Baliseninformation enthält genaue Positionsdaten für den jeweiligen Streckenpunkt A, B, C, D der entsprechenden Balise 3.

Die Wegmesseinrichtung 8, die bei der Ausführungsform in der Figur beispielsweise eine Odometrieeinrichtung ist, bestimmt kontinuierlich den zurückgelegten Weg des Fahrzeugs 1. Bei der beispielhaften Ausführungsform in der Figur umfasst die Wegmesseinrichtung 8 wenigstens einen mit einem der Räder 10 des Fahrzeugs 1 verbundenen Weginkrementalgeber, der die Umdrehungen des Rades 10 erfasst. Zusammen mit dem Durchmesser des Rades 10, der zuvor z.B. bei einer Wartung möglichst exakt ausgemessen worden ist, kann der Umfang des Rades 10 und dadurch der zurückgelegte Weg bestimmt werden. Dadurch kann die Position des Fahrzeugs 1 während der Fahrt auch zwischen den Balisen an jedem Punkt exakt bestimmt werden. Allerdings kann diese Positionsbestimmung fehlerhaft sein, weil z.B. der Raddurchmesser fehlerhaft gemessen wurde oder sich verändert hat. Diese Problematik wird durch die erfindungsgemäße Einrichtung 5 zur Positionsbestimmung und das erfindungsgemäße Verfahren kompensiert. Das erfindungsgemäße Verfahren wird im Folgenden erläutert.

Für unterschiedliche Abstände 11 zwischen jeweils zwei Streckenpunkten A, B, C, D werden jeweils Abstandswerte ermittelt. Die jeweiligen zwei Streckenpunkte können hintereinander liegen, wie z. B. AB, aber auch weiter auseinander, wie z. B. AD. Für die Streckenpunkte A, B, C, D können diese Abstände beispielsweise AB, AC, AD, BC, BD oder CD sein.

Für die Abstände 11 werden erste Abstandswerte X auf eine erste Art ermittelt. Bei der beispielhaften Ausführungsform in der Figur werden die Abstandswerte X dieser ersten Art mittels der Wegmesseinrichtung 8 ermittelt. Theoretisch werden die Balisen 3 mit regelmäßigem Abstand von beispielsweise 1 km zueinander verlegt. Der exakte Abstandswert variiert aber und muss für die Positionsbestimmung daher genau ermittelt werden. Beispielsweise beträgt der durch die Wegmesseinrichtung 8 ermittelte erste Abstandswert X zwischen den Streckenpunkten A und D 1,03 km. Die mehreren ersten Abstandswerte X werden im Folgenden mit den dazugehörigen Streckenpunkten als Index versehen. So ist beispielsweise der mit X_{AB} bezeichnete erste Abstandswert der für den Abstand 11 zwischen den Streckenpunkten A und B ermittelte Abstandswert.

Erfindungsgemäß werden weiterhin mehrere zweite Abstandswerte Y für die gleichen Abstände 11 zwischen den jeweiligen zwei Streckenpunkten A, B, C, D auf eine zweite unterschiedliche Art ermittelt, die zur ersten Art verschieden ist. Bei der beispielhaften Ausführungsform in der Figur wird die digitale Karte 4 zur Ermittlung der Abstandswerte Y gemäß dieser zweiten Art verwendet. So ergibt sich beispielsweise für den Abstand 11 zwischen den Streckenpunkten A und B ein zweiter Abstandswert Y_{AB}, der hier z.B. 1,02 km beträgt. Auf diese Weise werden mehrere erste Abstandswerte X und mehrere zweite Abstandswerte Y für die gleichen Abstände 11 zwischen den Streckenpunkten A, B, C, D ermittelt.

Aus den ermittelten ersten Abstandswerten X und zweiten Abstandswerten Y werden anschließend Abstandswertepaare für den Abstand 11 zwischen den gleichen zwei Streckenpunkten A, B, C, D gebildet. Für den Abstand 11 zwischen den Streckenpunkten A und B besteht das Abstandswertpaar somit aus dem ersten Abstandswert X_{AB} und dem zweiten Abstandswert Y_{AB}. Nachdem mehrere Abstandswertpaare gebildet sind, wird wenigstens ein gemeinsamer Korrekturwert K für die gebildeten Abstandswertpaare ermittelt, für den eine Differenz über die mehreren Abstandswertpaare minimal ist. Die Genauigkeiten der Abstandswertpaare werden hierbei berücksichtigt. Dies kann beispielsweise über die Methode der Summe der kleinsten Fehlerquadrate durchgeführt werden. Der Korrekturwert K kann entweder ein Korrekturfaktor sein, der beispielsweise einen Fehler des Raddurchmessers des Rades 10 bei Verwendung der Wegmesseinrichtung 8 repräsentiert oder ein Offsetkorrekturwert, der einen konstanten Fehler beispielsweise bei der Verlegung der Balisen 3 repräsentiert und addiert werden muss.

Die erfindungsgemäße Einrichtung 5 zur Positionsbestimmung umfasst als erste Abstandsbestimmungseinrichtung die Wegmesseinrichtung 8, als zweite Abstandsbestimmungseinrichtung die Einrichtung 9 zur Ermittlung von Abstandswerten aus der digitalen Karte 4 und eine Recheneinrichtung 12. Die Recheneinrichtung 12 bildet die mehreren Abstandswertpaare und ermittelt den wenigstens einen gemeinsamen Korrekturwert K. Der oder die Korrekturwerte K werden von der Recheneinrichtung 12 für die Korrektur der Positionsbestimmung verwendet. So kann eine genauere Positionsbestimmung stattfinden.

## Patentansprüche

1. Verfahren zur Positionsbestimmung eines spurgebundenen Fahrzeugs (1) während der Fahrt auf einer Fahrstrecke (2) mit Streckenpunkten (A, B, C, D) mit bekannter Position, bei dem mehrere erste Abstandswerte (X) für unterschiedliche Abstände (11) zwischen jeweils zwei der Streckenpunkte (A, B, C, D) auf der Fahrstrecke (2) des Fahrzeugs (1) auf eine erste Art ermittelt werden,
bei dem mehrere zweite Abstandswerte (Y) für die unterschiedlichen Abstände (11) zwischen den jeweils zwei Streckenpunkten (A, B, C, D) auf eine zweite zur ersten unterschiedlichen Art ermittelt werden,
bei dem mehrere Abstandswertepaare aus jeweils dem ersten Abstandswert (X) und dem zweiten Abstandswert (Y) für den Abstand zwischen den gleichen zwei Streckenpunkten (A, B, C, D) gebildet werden,
bei dem wenigstens ein gemeinsamer Korrekturwert (K) für die mehreren Abstandswertepaare ermittelt wird, für den die Differenz über die mehreren Abstandswertepaare minimal ist, und bei dem der ermittelte Korrekturwert (K) bei der Positionsbestimmung des Fahrzeugs (1) für eine Korrektur der Positionsbestimmung verwendet wird.

2. Verfahren nach Anspruch 1,
**dadurch gekennzeichnet, dass** der erste Abstandswert (X) mittels einer Wegmesseinrichtung (8) und der zweite Abstandwert (Y) mit Hilfe von Karteninformationen bestimmt werden.

3. Verfahren nach Anspruch 2,
**dadurch gekennzeichnet, dass** als Wegmesseinrichtung (8) eine Odometrieeinrichtung verwendet wird.

4. Verfahren nach Anspruch 2,
**dadurch gekennzeichnet, dass** als Wegmesseinrichtung (8) eine Radarmesseinrichtung verwendet wird.

5. Verfahren nach einem der oben genannten Ansprüche,
**dadurch gekennzeichnet, dass** der erste Abstandswert (X) mit dem Korrekturwert (K) als Korrekturfaktor multipliziert wird, der einen Fehler eines Raddurchmessers des Fahrzeugs (1) repräsentiert.

6. Verfahren nach einem der oben genannten Ansprüche,
**dadurch gekennzeichnet, dass** der zweite Abstandswert (Y) mit dem Korrekturwert (K) als Korrekturoffsetwert addiert wird, der einen Offsetfehler der Streckenpunkte (A, B, C, D) in den Karteninformationen repräsentiert.

7. Verfahren nach einem der oben genannten Ansprüche,
**dadurch gekennzeichnet, dass** der wenigstens eine Korrekturwert (K) als Korrekturoffsetwert und/oder Korrekturfaktor verwendet wird.

8. Computerprogrammprodukt mit Programmbefehlen zur Durchführung des Verfahrens nach einem der Ansprüche 1 bis 7.

9. Bereitstellungsvorrichtung für das Computerprogrammprodukt nach Anspruch 8, wobei die Bereitstellungsvorrichtung das Computerprogrammprodukt speichert und/oder bereitstellt.

10. Einrichtung zur Positionsbestimmung für ein spurgebundenes Fahrzeug (1) während der Fahrt auf einer Fahrstrecke (2) mit Streckenpunkten (A, B, C, D) mit bekannter Position,
mit wenigstens einer ersten Abstandsbestimmungseinrichtung zum Ermitteln mehrerer erster Abstandswerte (X) für unterschiedliche Abstände zwischen jeweils zwei Streckenpunkten (A, B, C, D) auf einer Fahrstrecke (2) des Fahrzeugs (1) auf eine erste Art,
mit wenigstens einer zweiten Abstandsbestimmungseinrichtung zum Ermitteln mehrerer zweiter Abstandswerte (Y) für die unterschiedlichen Abstände (11) zwischen den jeweils zwei Streckenpunkten (A, B, C, D) auf eine zweite zur ersten unterschiedlichen Art, und
mit wenigstens einer Recheneinrichtung (12), die zum Bilden mehrerer Abstandswertepaare aus jeweils dem ersten Abstandswert (X) und dem zweiten Abstandswert (Y) für den Abstand (11) zwischen den gleichen zwei Streckenpunkten (A, B, C, D) und zum Ermitteln wenigstens eines gemeinsamen Korrekturwerts (K) für die mehreren Abstandswertepaare, für den die Differenz über die mehreren Abstandswertepaare minimal ist, ausgebildet ist,
wobei die Einrichtung (5) zum Verwenden des ermittelten Korrekturwerts(K) bei der Positionsbestimmung des Fahrzeugs (1) für eine Korrektur der Positionsbestimmung ausgebildet ist.

11. Steuerungseinrichtung, insbesondere ATO-Einrichtung, die zur Steuerung eines spurgebundenen Fahrzeugs ausgebildet ist, **dadurch gekennzeichnet, dass** die Steuerungseinrichtung (6) die Einrichtung (5) zur Positionsbestimmung nach Anspruch 10 verwendet oder umfasst.

12. Spurgebundenes Fahrzeug,
**dadurch gekennzeichnet, dass** das spurgebundene Fahrzeug (1) wenigstens eine Einrichtung (5) zur Positionsbestimmung nach Anspruch 10 und/oder eine Steuerungseinrichtung (6) nach Anspruch 11 umfasst.

13. Spurgebundenes Fahrzeug (1) nach Anspruch 12,
**dadurch gekennzeichnet, dass** das spurgebundene Fahrzeug (1) wenigstens eine Balisenempfangseinrichtung (7) umfasst, die zum Empfangen von Baliseninformationen ausgebildet ist, wobei die Streckenpunkte (A, B, C, D) auf der Fahrstrecke (2) des spurgebundenen Fahrzeugs (1) zumindest teilweise als Baliseninformationen aussendende Balisen ausgebildet sind.

14. Spurgebundenes Fahrzeug (1) nach Anspruch 12 oder 13,
**dadurch gekennzeichnet, dass** das spurgebundene Fahrzeug (1) wenigstens eine Wegmesseinrichtung (8), insbesondere eine Odometrieeinrichtung, und wenigstens eine Einrichtung (9) zur Ermittlung von Abstandswerten (X, Y) aus Karteninformationen umfasst.

## Claims

1. Method for determining the position of a track-bound vehicle (1) during the journey on a driving route (2) with route points (A, B, C, D) with a known position,
in which a number of first distance values (X) for different distances (11) between two of the route points (A, B, C, D) on the driving route (2) of the vehicle (1) in each case are determined in a first manner,
in which a number of second distance values (Y) for the different distances (11) between the two route points (A, B, C, D) in each case are determined in a second manner which differs from the first,
in which a number of distance value pairs are formed from in each case the first distance value (X) and the second distance value (Y) for the distance between the same two route points (A, B, C, D),
in which at least one shared correction value (K) is determined for the number of distance value pairs, for which the difference over the number of distance value pairs is minimal and in which the determined correction value (K) is used to correct the position determination when the position of the vehicle (1) is being determined.

2. Method according to claim 1,
**characterised in that**
the first distance value (X) is determined by means of a distance measurement device (8) and the second distance value (Y) is determined with the aid of map information.

3. Method according to claim 2,
**characterised in that**
an odometry device is used as a distance measurement device (8).

4. Method according to claim 2,
**characterised in that**
a radar measurement device is used as a distance measurement device (8).

5. Method according to one of the afore-cited claims, **characterised in that**
the first distance value (X) is multiplied by the correction value (K) as a correction factor which represents an error in a wheel diameter of the vehicle (1).

6. Method according to one of the afore-cited claims, **characterised in that**
the second distance value (Y) is added to the correction value (K) as a correction offset value which represents an offset error of the route points (A, B, C, D) in the map information.

7. Method according to one of the afore-cited claims, **characterised in that**
the at least one correction value (K) is used as a correction offset value and/or correction factor.

8. Computer program product with program commands for carrying out the method according to one of claims 1 to 7.

9. Provisioning apparatus for the computer program product according to claim 8, wherein the provisioning apparatus stores and/or provides the computer program product.

10. Device for determining the position of a track-bound vehicle (1) during the journey on a driving route (2) with route points (A, B, C, D) with a known position,
having at least one first distance determination device for determining a number of first distance values (X) for different distances between two route points (A, B, C, D) in each case on a driving route (2) of the vehicle (1) in a first manner,
having at least a second distance determination device for determining a number of second distance values (Y) for the different distances (11) between the two route points (A, B, C, D) in each case in a second manner which differs from the first, and
having at least one computing device (12) which is embodied to form a number of distance value pairs from in each case the first distance value (X) and the second distance value (Y) for the distance (11) between the same two route points (A, B, C, D) and for determining at least one shared correction value (K) for the number of distance value pairs, for which the difference over the number of distance value pairs is minimal, wherein the device (5) is embodied to use the determined correction value (K) when the position of the vehicle (1) is determined for a correction of the position determination.

11. Control device, in particular ATO device, which is embodied to control a track-bound vehicle, **characterised in that** the control device (6) uses or comprises the device (5) for determining the position according to claim 10.

12. Track-bound vehicle,
**characterised in that**
the track-bound vehicle (1) comprises at least one device (5) for determining the position according to claim 10 and/or a control device (6) according to claim 11.

13. Track-bound vehicle (1) according to claim 12, **characterised in that**
the track-bound vehicle (1) comprises at least one balise receiving device (7), which is embodied to receive balise information, wherein the route points (A, B, C, D) on the driving route (2) of the track-bound vehicle (1) are embodied at least in part as balises emitting balise information.

14. Track-bound vehicle (1) according to claim 12 or 13, **characterised in that**
the track-bound vehicle (1) comprises at least one distance measurement device (8), in particular an odometry device, and at least one device (9) for determining distance values (X, Y) from map information.

## Revendications

1. Procédé de détermination de la position d'un véhicule (1) guidé sur rail pendant le trajet sur une voie (2) de circulation par des points (A, B, C, D) de la voie de position connue,
dans lequel on détermine d'une première manière plusieurs premières valeurs (X) de distance pour des distances (11) différentes entre respectivement deux des points (A, B, C, D) de la voie sur la voie (2) de circulation du véhicule (1),
dans lequel on détermine d'une deuxième manière différente de la première plusieurs deuxièmes valeurs (Y) de distance pour les distances (11) différentes entre les respectivement deux points (A, B, C, D) sur la voie,
dans lequel on forme plusieurs paires de valeurs de distance composées respectivement de la première valeur (X) de distance et de la deuxième valeur (Y) de distance pour la distance entre les mêmes deux points (A, B, C, D) de la voie,
dans lequel on détermine au moins une valeur (K) de correction commune pour les plusieurs paires de valeurs de distance, pour laquelle la différence sur les plusieurs paires de valeurs de distance est minimum, et dans lequel on utilise, pour une correction de la détermination de la position, la valeur (K) de correction déterminée dans la détermination de la position du véhicule (1).

2. Procédé suivant la revendication 1,
**caractérisé en ce que** l'
on détermine la première valeur (X) de distance au moyen d'un dispositif (8) de mesure du chemin et la deuxième valeur (Y) de distance à l'aide d'informations cartographiques.

3. Procédé suivant la revendication 2,
**caractérisé en ce que** l'
on utilise comme dispositif (8) de mesure du chemin un dispositif d'odométrie.

4. Procédé suivant la revendication 2,
**caractérisé en ce que** l'
on utilise comme dispositif (8) de mesure du chemin un dispositif de mesure radar.

5. Procédé suivant l'une des revendications précédentes, **caractérisé en ce que** l'
on multiplie la première valeur (X) de distance par la valeur (K) de correction comme facteur de correction, qui représente un défaut d'un diamètre de roue du véhicule (1).

6. Procédé suivant l'une des revendications précédentes, **caractérisé en ce que** l'
on additionne la deuxième valeur (Y) de distance à la valeur (K) de correction comme valeur de décalage de correction, qui représente un défaut de décalage des points (A, B, C, D) sur la voie dans les informations cartographiques.

7. Procédé suivant l'une des revendications précédentes, **caractérisé en ce que** l'
on utilise la au moins une valeur (K) de correction comme valeur de décalage de correction et/ou comme facteur de correction.

8. Produit de programme d'ordinateur comprenant des instructions de programme pour exécuter le procédé suivant l'une des revendications 1 à 7.

9. Dispositif de mise à disposition du produit de programme d'ordinateur suivant la revendication 8, dans lequel le dispositif de mise à disposition met en mémoire et/ou met à disposition le produit de programme d'ordinateur.

10. Dispositif de détermination de la position d'un véhicule (1) guidé sur rail pendant le trajet sur une voie (2) de circulation par des points (A, B, C, D) sur la voie de position connue,
comprenant au moins un premier dispositif de détermination de distance pour la détermination d'une première manière de plusieurs premières valeurs (X) de distance pour des distances différentes entre respectivement deux points (A, B, C, D) sur une voie (2) de circulation du véhicule (1),
comprenant au moins un deuxième dispositif de détermination de distance pour la détermination d'une deuxième manière différente de la première de plusieurs deuxièmes valeurs (Y) de distance pour les distances (11) différentes entre les respectivement deux points (A, B, C, D) sur la voie, et
comprenant au moins un dispositif (12) informatique, qui est constitué pour la formation de plusieurs paires de valeurs de distance composées chacune de la première valeur (X) de distance et de la deuxième valeur (Y) de distance pour la distance (11) entre les deux mêmes points (A, B, C, D) sur la voie et pour la détermination d'au moins une valeur (K) commune de correction pour les plusieurs paires de valeurs de distance, pour laquelle la différence sur les plusieurs paires de valeurs de distance est minimum,
dans lequel le dispositif (5) est constitué, pour une correction de la détermination de la position, pour l'utilisation de la valeur (K) de correction déterminée dans la détermination de la position du véhicule (1).

11. Dispositif de commande, en particulier dispositif ATO, qui est constitué pour la commande d'un véhicule guidé sur rail, **caractérisé en ce que** le dispositif (6) de commande utilise ou comprend le dispositif (5) de détermination de la position suivant la revendication 10.

12. Véhicule guidé sur rail,
**caractérisé en ce que**
le véhicule (1) guidé sur rail comprend au moins un dispositif (5) de détermination de la position suivant la revendication 10 et/ou un dispositif (6) de commande suivant la revendication 11.

13. Véhicule (1) guidé sur rail suivant la revendication 12, **caractérisé en ce que**
le véhicule (1) guidé sur rail comprend au moins un dispositif (7) de réception de balise, qui est constitué pour la réception d'informations de balise, dans lequel des points (A, B, C, D) sur la voie (2) de circulation du véhicule (1) guidé sur rail sont constitués au moins en partie sous la forme de balises émettant des informations de balise.

14. Véhicule (1) guidé sur rail suivant la revendication 12 ou 13, **caractérisé en ce que**
le véhicule (1) guidé sur rail comprend au moins un dispositif (8) de mesure du chemin, en particulier un dispositif d'odométrie, et au moins un dispositif (9) de détermination de valeurs (X, Y) de distance à partir d'informations cartographiques.
